# EUROPEAN PATENT SPECIFICATION

(11) **EP 0 391 424 B1**
(45) Date of publication and mention of the grant of the patent: **18.10.1995**
(21) Application number: 90106558.1
(22) Date of filing: 05.04.1990
(51) Int. Cl.: G11B 17/26, G11B 25/04, G11B 17/04

(54) **Disk reproducing apparatus**
Wiedergabegerät für scheibenförmigen Datenträger
Appareil de lecture de disques

(30) Priority: 06.04.1989 JP 87621/89
(43) Date of publication of application: 10.10.1990
(73) Proprietor: MATSUSHITA ELECTRIC INDUSTRIAL CO., LTD., Kadoma-shi, Osaka-fu, 571 (JP)
(72) Inventor: Umesaki, Kiyosi, Neyagawa-shi Osaka-fu (JP)
(74) Representative: Eisenführ, Speiser & Partner

(56) References cited:
- EP-A- 0 177 232
- EP-A- 0 296 829
- FR-A- 2 343 307
- GB-A- 2 160 349
- US-A- 4 589 101
- US-A- 4 797 865

## Description

The present invention relates to a disk reproducing apparatus as defined in the preamble of claim 1.

Ordinary disks of 12 cm in size (hereinafter referred to as CD) and small-diameter of disks of 8 cm in size (hereinafter referred to as CD single) are generally used as compact disks. In recent years, CD players for reproduction of such disks have been spread considerably. Such CD players for reproduction are not only of stationary type, but also of portable type, and a car-loading type is extensively put on the market. In addition to the disks of 12 cm, CD singles of 8 cm appear and are expected to be even remarkably increased in the future. At the beginning, CD players have adopted a method of effecting reproduction by means of adapters provided with respect to CD singles. But direct reproduction of CD singles is gradually increasing without the use of adapters to provide improved operation and this tendency increases especially in car-loading use. Change type players are also increasing because of their superior operability, because the disks are drawn one by one out of the exclusive magazine which has many disks stored therein to effect reproduction.

Especially in CD players for car-loading use, measurement of CD singles without adapters is provided at the rear, because disk engagement is carried out by a front loading system increasingly used in the car. Measuring devices to cope with this problem are desired. Even in change type CD players, measuring of CD singles has to take place at the rear, which leads to the problem that the location for setting the CD singles is restricted due to the size of the main body.

GB-A-2 160 349 discloses a disc player fitted for automatic change of discs comprising a disc pack receiving table for receiving and holding a disc pack containing a plurality of discs, a disc rotating device for rotating a disc taken out from the disc pack and loaded thereon, and a movable chassis operative to move up and down in relation to the disc pack receiving table and having a sliding lever for actuating a sliding member provided in the disc pack to have a selected disc out of the disc pack, a motor for rotating selectively in clockwise and counterclockwise directions, a driving roller by the motor to carry the selected disc taken out from the disc pack to the disc rotating device, and a driving mechanism actuated by the motor to drive the sliding lever to take a disc out of the disc pack when the motor rotates in one direction and to drive the sliding lever to replace the disc when the motor rotates in the other direction.

US-A-4 797 865 describes an information recording disc player comprising a first cartridge receiving part for receiving a first cartridge which can accomodate a plurality of discs, a second cartridge receiving part for receiving a second cartridge which can accommodate a single disc, and a disc playing unit for selectively playing an arbitrary one of the discs accomodated within the first and second cartridges respectively loaded in the first and second cartridges receiving parts.

US-A-4 589 101 describes an apparatus for recording and/or playback of recordings on discs including a selective disc changer suited particularly for discs of the "compact disc" type. The playback unit has a housing mounted for helicoidal movement between a disc operating plane and an entrance plane for receiving a disc inserted edgewise and rolling into the housing along the entrance plane. A removable magazine provides a plurality of disc storage compartments arranged side by side and successively movable into alignment with the entrance plane, the magazine being received on a tray mounted on the chassis of the apparatus. The magazine is locked against being removed from the tray responsive to transfer of a disc from a storage compartment of the magazine to ensure that the magazine is locked against removal from the time that one of the discs stored in a compartment of the magazine has left its storage position until it is returned to the magazine compartment.

It is the object of the present invention to eliminate the above discussed drawbacks inherent to the prior art disk reproducing apparatus and to provide an improved change type disc reproducing apparatus which is capable of using both CDs and CD singles in a front loading system, but is small in size and includes a magazine for use of CD singles.

In accomplishing these objects, the present invention provides a disk reproducing apparatus comprising a magazine for storing a plurality of disks therein, a disk musical performance means, and a disk transfer means which is disposed between the mounting position of the magazine and the disk musical performance means and is operated so as to effect the transfer of the disk between the magazine engaged in the mounting position and the disk musical performance means. The disk reproducing apparatus of the invention is characterized in that the disk musical perfomance means is disposed in a position deviated obliquely rearwards with respect to the mounting position of the magazine.

In an embodiment of the invention, the disk transfer means includes a retaining member capable to effect a vertical movement so as to correspond to the position of each disk accommodated in the magazine, and one set of disk feed rollers supported by the retaining member for the vertical movement.

A further embodiment of the invention comprises a disk insertion opening disposed in the upper or lower portion of the mounting position for the engagement of a second disk which is different in diameter from the first disk, wherein the disk transfer means is disposed between the mounting position of the magazine, the disk insertion opening and the disk musical performance means and is operated so as to effect the transfer of the disk between the magazine engaged in the mounting position, the disk insertion opening and the disk musical performance means.

In still a further embodiment of the invention, the set of disk feed rollers are capable to effect the vertical movement so as to correspond to the portion of both the first and second disks and are retained by the retaining member, wherein the retaining member may pivot around a fixed point on a stationary base plate of the apparatus and is adapted to wait in a condition orthogonal to the insertion direction of the second disk into the disk insertion opening in order to transfer the second disk engaged by the disk inserting opening and in a condition rotated by the angle given with respect to said insertion direction in order to transfer the first disk accommodated in the magazine.

In still a further embodiment of the invention, the insertion opening is adapted to engage with the first and second disks different in diameter, the disk musical performance means is disposed in a position deviated obliquely rearwards with respect to the disk insertion opening, the disk transfer means is operated so as to effect the transfer of the disks between the disk insertion opening and the disk musical performance means, wherein a prevention member is provided in a position forward of the disk transfer means in the disk insertion direction, which moves to prevent that in the given position a first or second disk is inserted into the disk insertion opening, and sensor means is disposed to detect the difference between the stop condition of first and the second disks resulting from one pair of detection guide members so as to discriminate between first and second disks inserted.

In another embodiment of the invention, the disk feed amount by the disk transfer means is adapted to be selected from the sensor means output in accordance with first or second disks.

Still another embodiment of the invention provides an initial resetting operation effecting a disk being in the musical performance position or being in the course of transport, when the power supply has been put to work again following a power cut off, is to be discharged from the disk insertion opening despite the original disk position.

In still a further embodiment of the invention, the disk musical performance means is disposed in a height position not in contact with the mounting position of the magazine and the disk in the musical performance position is different in position from the magazine, the apparatus comprising a first guide means effecting positional regulation of the disk when drawn out horizontally from the magazine, a second guide means disposed under the magazine so as to effect positional regulation of the disk when moved towards the magazine in reverse horizontal direction, so that the disk transfer means effects the vertical movement after the disk has been horizontally drawn out from the magazine and moves the disk into the musical performance position after said movement towards the magazine.

Finally, in an embodiment of the invention, the disk musical performance means includes a traverse main body upwardly urged with a spring or dumper rubber into a floating condition during the time of musical performance so that the traverse main body may be secured downwardly during the horizontal movement of the disk by the disk transfer means.

The present invention has the advantage that, when accommodating a magazine of CD singles within the space as restricted by DIN size for car-loading use, the musical performance position is arranged obliquely and rearwards with respect to the accommodation position, so that the space may be effectively utilized and the function of the auto-changer operation is available.

The disc reproducing apparatus of the present invention allows to reproduce a plurality of optical discs (i. e. "compact discs") and/or discs of different diameters.

The present invention also has the advantage in that both a change function by the magazine and a direct insertion opening for a CD or a CD single are provided, so that not only loading of ordinary disks may be effected. Further, both continuous reproduction by the magazine and reproduction by direct insertion without the use of the magazine may be effected. By the vertical movement and the pivoting operation of a set of rollers the apparatus of the invention may also, leading to the advantage that the number of components may be reduced and space may be saved compared to a case device wherein the exclusive rollers are respectively arranged.

These and other objects and features of the present invention will become apparent from the following description taken in conjunction with the preferred embodiment thereof and with reference to the accompanying drawings, in which;
Fig. 1 is a plan view of an apparatus of the present invention showing the relationship between a CD player magazine and the disk musical performance position thereof;
Fig. 2 is a side view of the apparatus of Fig. 1;
Fig. 3 is a plan view of an embodiment having a magazine and a direct insertion opening;
Fig. 4 is a view showing the front panel of embodiment of Fig. 3;
Fig. 5 is an view showing a method for discriminating between a CD and a CD single;
Fig. 6 illustrates the engagement operation of the CD after the discrimination thereof has been effected;
Fig. 7 illustrates the engagement operation of the CD single after the discrimination has been effected;
Fig. 8 and Fig. 9 are side face views each showing a method for preventing the double insertion of the disk during the musical performance or during the operation;
Fig. 10 and Fig. 11 are side views each showing a method for effecting disk loading by the difference between the fixing of the traverse mechanism and the floating condition;
Fig. 12 through Fig. 14 show an example of the space saving operation about the disk engagement from the magazine;

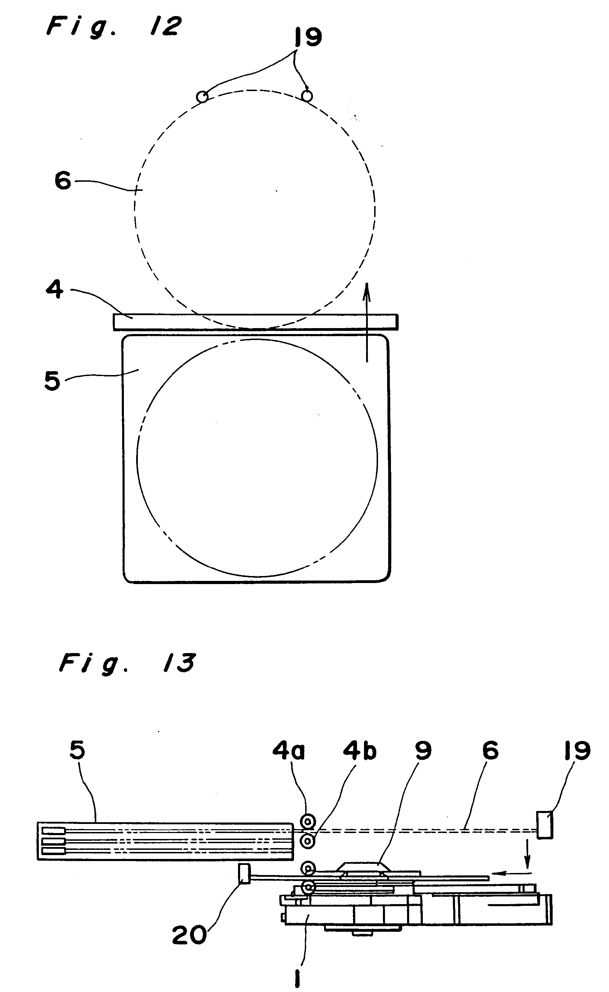

Fig. 12 is a plan view showing the drawing operation and the horizontal movement of the disk from the magazine;
Fig. 13 is a side face view showing the horizontal movement during and after the descending operation of the disk; and

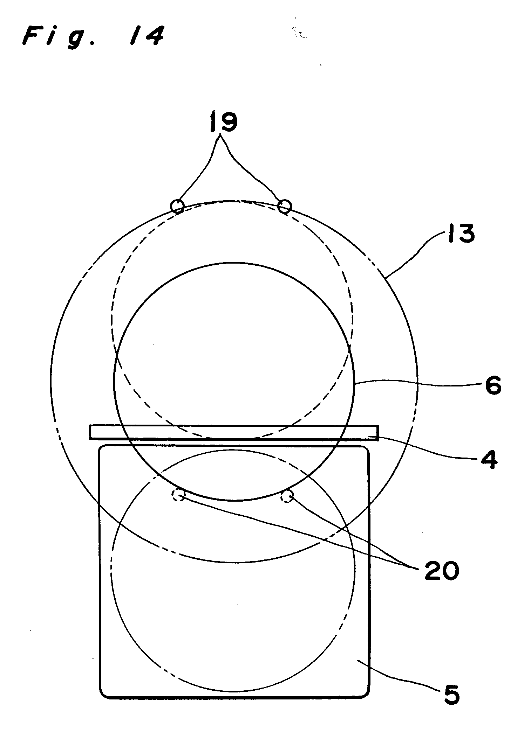

Fig. 14 is a plan view showing the positions of the CD and the CD single, and the magazine in the disk engagement position.

Before the description of the present invention proceeds, it is to be noted that like parts are designated by like reference numerals throughout the accompanying drawings.

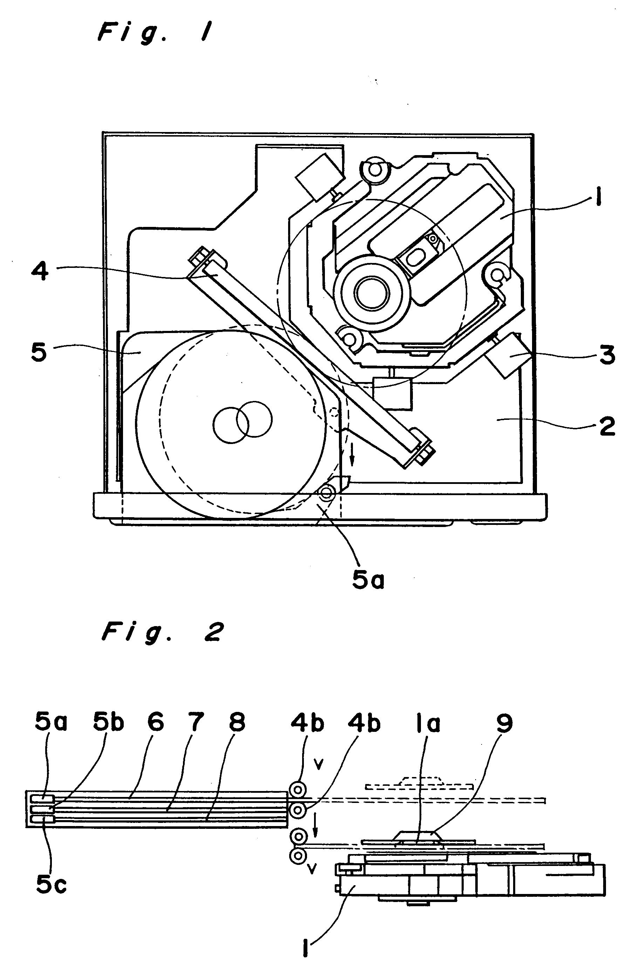

Referring now to the drawings, there is shown in Figs. 1 and 2, the relationship between the magazine of the CD player and the disk musical performance position according to one preferred embodiment of the present invention. Fig. 1 shows a condition of a DIN size CD player seen from above. Fig. 2 is a side view thereof. The CD player as the disk reproducing apparatus of the present invention includes a traverse mechanism 1, effecting the ordinary traverse operations such as disk rotation, optical pick movement, and so on so as to read the signals of the disk faces, a base plate 2 having various mechanism components being mounted on it, a dumper rubber 3 fixed on the base plate 2 and engaged with the traverse mechanism 1 and further provided with a buffer function so that the impact, oscillations may not be transmitted into the traverse mechanism, and a roller arm 4 which is disposed for its vertical operations on the mechanism basic plate 2 and causes the disk to move at the roller rotating operation by the pressure fixing of a pair of rollers 4a, 4b, and has a member built-in in the roller arm 4 as a guide so that the disk may not be shaky vertically with the disk grasped between the rollers being overhung in the horizontal movement of the disk. A magazine 5 with three CD singles stored therein has disk take-out levers 5a, 5b, 5c arranged corresponding to each disk of three CD singles so as to function to engage the disk between the rollers by the pushing operation in the arrow marked direction. The traverse mechanism 1 and the magazine 5 are composed diagonally in the DIN size, and the roller arm 4 is obliquely arranged between the traverse mechanism and the magazine. Referring to Fig. 2, reference numeral 6 is a first disk, which is stored in the upper stage of the magazine 5, reference numeral 7 is a second disk which is stored in the intermediate stage thereof, and reference numeral 8 is a third disk which is stored in the lower stage. Reference numeral 9 is a clamper which has relation to be absorbed by a centering ring la of the traverse mechanism 1 and a magnet so as to effect the disk clamping operation at the engagement of the disk. By the pushing operation of the disk take-out lever 5a of the magazine 5, the disk 6 is projected out of the magazine 5 so that the disk is grasped between the passive roller 4a and the driving roller 4b. The disk 6 effects a horizontal movement onto the right hand side by the clockwise rotation of the driving roller 4b. The rotation of the driving roller 4b is stopped in a position where the disk has been drawn completely out of the magazine 5. The roller arm 4 is caused to effect the downward movement with the disk 6 being grasped between them. The disk 6 has been caused to come to a stop in a position where it may be engaged with the centering ring la. Thereafter, the passive roller 4a is upwardly escaped, and the driving roller 4b is downwardly escaped so as to provide a condition capable of effecting the musical performance. In this case, the clamper 9 is in a position above the disk to be drawn out from the magazine 5, and descends according to the downward movement of the disk or after the movement. Also, after the disk has been clamped onto the traverse mechanism 1 by the clamper 9, the rollers 4a, 4b move in the separating direction, needless to say, to allow the disk to be rotated. Such construction as described hereinabove allows the magazine 5 to be completely accommodated into the panel within the space of the DIN, and may simplifies the operation necessary for the drawing out operation of the disk.

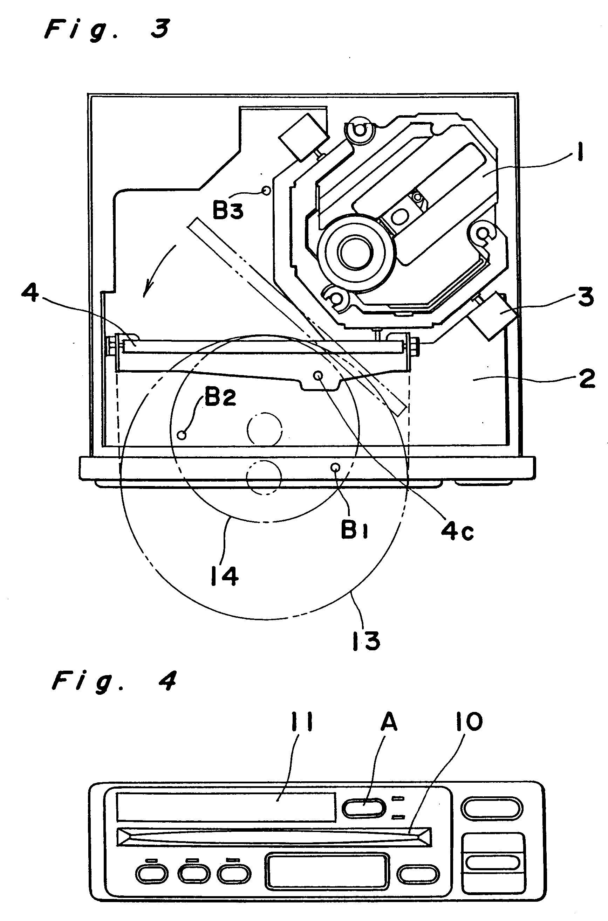

Fig. 3 is a plan view showing a case where the direct insertion may be effected by the front loading operation in the construction described in Fig. 1 and Fig. 2. Fig. 4 shows a front panel in this case. Referring to Fig. 3, the roller arm 4 is in a truly lateral condition by the rotation in a counter-clockwise direction around the pivoting shaft 4c from the condition of Fig. 1, and is lowered down to a position where it is not in contact against the magazine 5 even in the height direction. Referring to Fig. 4, there are a direct insertion opening 10 which is provided in a location corresponding to the above described position of the roller arm 4, and a magazine storing opening 11 constructed above the direct insertion opening. Also, a button A in Fig. 4 is provided to select a disk. The button effects a switching operation of a condition of reproducing the disk inserted from the direct insertion opening 10 or a condition of reproducing the disk provided within the magazine 5 of the magazine storing opening 11. Every time the button A is depressed, the condition is alternately switched. For example, the change from the Fig. 1 condition of the roller arm 4 to the Fig. 3 condition is also effected by the depressing operation of the button A. When the button A is depressed in the condition of the roller arm 4 of Fig. 1, the condition of the roller arm 4 is provided as shown in a solid line of Fig. 3. When the button A is depressed again, the original condition of Fig. 1 is provided by the reverse operation. In a case where the disk 13 or 14 has been inserted into the direct insertion opening 10 in the condition of Fig. 3, the insertion disk 13 or 14 is detected by a photo-sensor B1 or B2 provided near the insertion opening 10, the rotation of a pair of rollers 4a, 4b of the roller arm 4 starts, and the disk effects the horizontal movement as far as the constant position by a method to be described later. Also, the roller arm 4 is rotated in the clockwise direction by a switch (not shown) for detecting the insertion of the magazine 5 into the magazine storing opening 11 (or by the depression of the above described button A) in the condition of Fig. 3, and becomes the first condition again, so that the disk engagement from the magazine 5 may be effected. In such construction as described hereinabove, by the vertical movement and the pivoting operation of the roller arm 4, it may be used for both the disk engagement from the magazine 5 and the disk engagement from the direct insertion opening 10, so that the number of the members may be reduced and the space may be saved, two methods of effecting musical performance may be used properly by the purposes, the CD single may be inserted from the direct insertion opening 10 and stored into the magazine 5 or the reverse operation thereof may be effected.

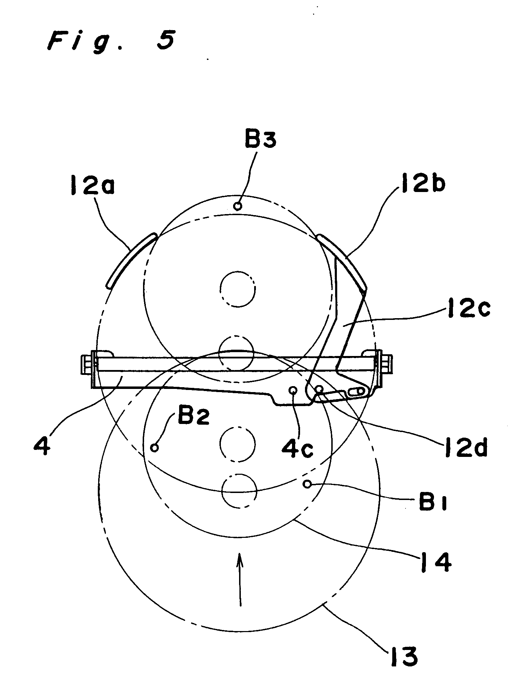

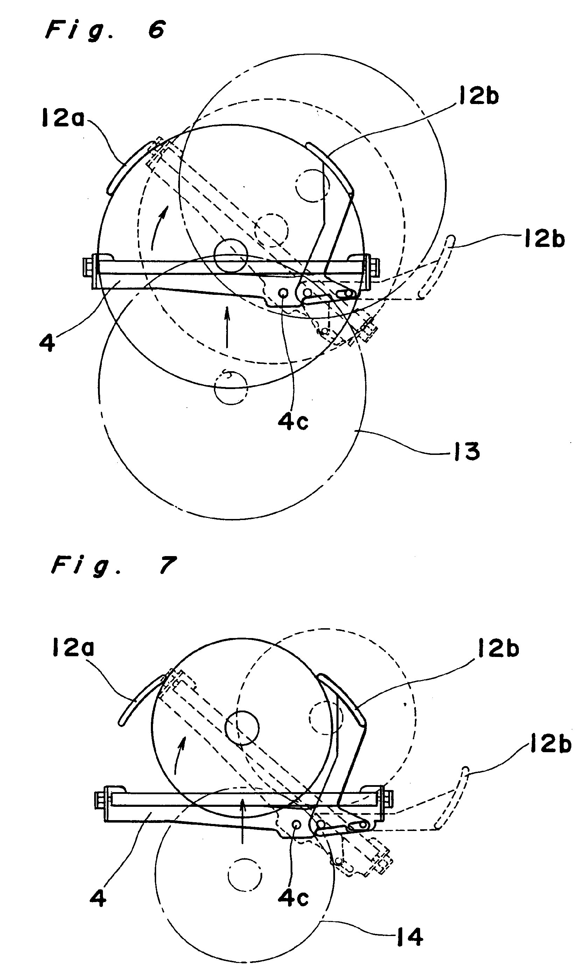

Fig. 5 shows a method of discriminating the CD and the CD single. Reference characters 12a, 12b are 8 - 12 detection guides, and operatively cooperate with the roller arm 4 so as to stop the advance of the inserted disk with the roller arm 4 being truly lateral. Also, the detection guide 12b is adapted to externally escape as shown in the broken line in Fig. 6 and Fig. 7 to be described later with the shaft 12d of the base portion of the arm 12c being a center when the roller arm 4 has pivoted in the clockwise direction as shown in Fig. 1 so as not to come into contact against the disk. Also, the 8 - 12 detection guides 12a, 12b are disposed one by one right and left in such a size as to come into contact with the external periphery of the CD 13. When the CD 13 has been inserted in the above described construction, the CD 13 is moved in an arrow mark direction, and thereafter, is stopped by the 8 - 12 detection guides 12a, 12b. Also, when the CD single 14 has been inserted, the CD 14 is likewise moved in the arrow mark direction, and thereafter, is stopped in a position with the CD single being grasped between the 8 - 12 detection guides 12a, 12b. When the CD single 14 has been inserted in a position shifted right or right, the CD single 14 is to stop finally in the same position so as to receive the directional correction by the 8 - 12 detection guides 12a, 12b. The roller of the roller arm 4 which is used in this case is narrower in the diameter of the central portion as compared with both the ends thereof, and the grasped CD single is likely to come closer towards the center. Accordingly, as each disk stops at a constant position, a portion where only either of the CD 13 and the CD single 14 exists is provided. Three photo-sensors B1, B2, B3 are disposed in the positions shown through the consideration of the portion, so that the discriminating operation may be effected whether the disk inserted from the insertion opening is the CD or the CD single. Namely, when the photo-sensor B3 of the tip end has detected the disk, it is discriminated that the CD single 14 has been inserted into the final position, and only the sensor B2 detects the disk. When the sensors B1, B3 do not detect the disk, it is discriminated that the CD 13 has been inserted into the final position.

Fig. 6 shows the operation in a case of the CD after the discrimination by Fig. 5. The roller arm 4 effects its pivoting operation in the clockwise direction with the pivoting shaft 4C being provided as a center, and with the CD 13 remaining grasped between the rollers 4a and 4b of the roller arm 4 and becomes a condition shown in the broken line. By the pivoting operation, the guide 12b from the 8 - 12 detection guides 12a, 12b is externally escaped not to come into contact with the disk in the position after the pivoting operation. By the rotation of the rollers 4a, 4b of the roller arm 4, the horizontal movement of the disk is effected again to stop the rotation at the musical performance position reached, and the clamper 9 is lowered with respect to the traverse mechanism 1, so that the CD 13 is grasped by the centering ring la and the clamper 9 into the engagement condition.

Fig. 7 shows the operation in a case of the CD single after the discriminating operation by Fig. 5. The roller arm 4 pivots in the clockwise direction into the condition shown in the broken line with the pivoting shaft 4C as a center, and with the CD single 14 remaining grasped by the rollers 4a, 4b of the roller arm 4. By the pivoting operation, the guide 12b from between the 8 - 12 detection guides 12a, 12b is externally escaped so as not to come into contact with the disk in the position after the pivoting operation. At this time, the original positions of the 8 - 12 detection guides 12a, 12b are set with respect to the traverse mechanism 1 so that the position of the CD single 14 after the pivoting operation thereof may become an engagement position. Thus, by the lowering operation of the clamp 9 with respect to the traverse mechanism 1 after the pivoting operation of the roller arm 4, the CD single 13 may be grasped by the centering ring la and the tramper 9 into the engagement condition. By such construction as described hereinabove, the discriminating operation between the CD an the CD single may be effected and the engagement operation may be effected in accordance with the case of the respective disks.

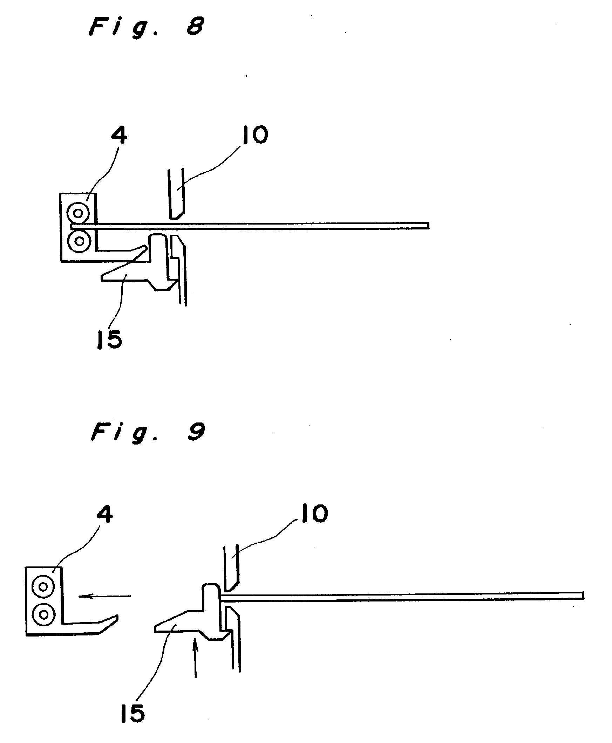

Fig. 8 and Fig. 9 show the construction for preventing the double insertion of the disk during the musical performance or during the operation. Fig. 8 shows a condition where the disk may be inserted. Fig. 9 shows a condition where the disk-is prevented from being inserted. In Fig. 8, reference numeral 15 is a prevention lever, which is mounted for its vertical motion on the mechanism basic plate 2, and is subject to a spring urging force in its upward direction or regulated in the operation in the lateral direction. When the roller arm 4 is located in a position corresponding to the insertion opening as shown in Fig. 3, the prevention lever 15 is in the engagement relation with respect to the lower arm 4, and is stopped in its descent position with respect to the spring urging force. Therefore, when the disk 13 or 14 is inserted from the direct insertion opening 10, it may reach between the rollers 4a and 4b of the roller arms 4. In Fig. 9, when the roller arm 4 is in such a position as shown in Fig. 1, the roller arm 4 is released in the engagement relation with the prevention lever 15, is not in the prevention position, with the prevention lever 15 being upwardly raised by the spring urging force. At this time, the prevention lever 15 closes the disk passing range of the direct insertion opening 10. Accordingly, the prevention lever 15 prevents the loading from being effected if the disk is intended to be inserted. In such construction as described hereinabove, in the condition provided during the musical performance or the change operation, the roller arm 4 is in the condition of Fig. 1, with the condition where the direct insertion may be effected being provided only in Fig. 3, so that the preventing conditions as the object is provided. Therefore, such simple construction as described hereinabove may prevent the double insertion during the musical performance or the change operation.

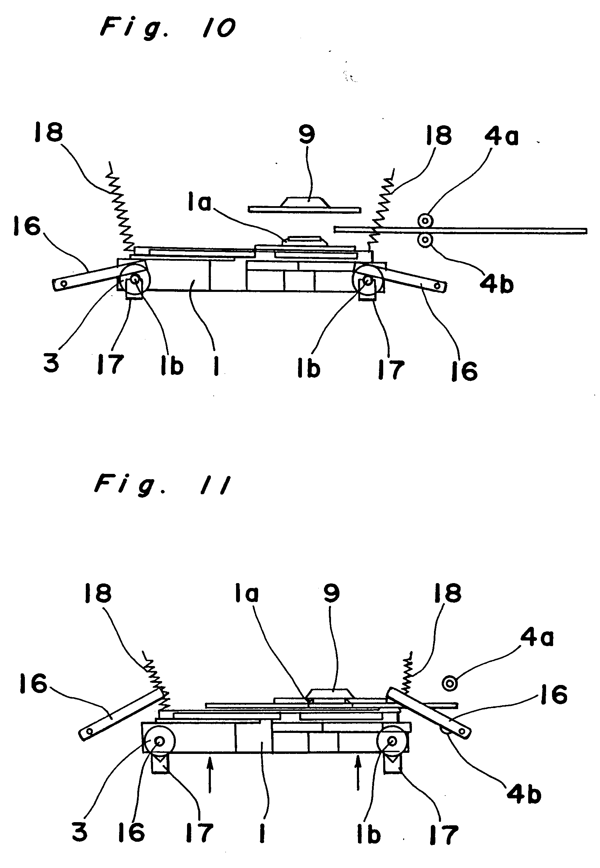

Fig. 10 and Fig. 11 show a method of effecting the disk loading operation by the difference between the traverse mechanism fixing and the floating condition. Fig. 10 shows the fixing condition of the traverse mechanism. Fig. 11 shows the floating condition of the traverse mechanism. In Fig. 10, reference numeral 16 is a stationary lever, which is disposed for its pivoting operation by the mechanism basic plate 2 so that the traverse mechanism 1 may be downwardly depressed. Reference numeral 17 is a stationary guide, which is mounted on the mechanism basic plate 2 so as to secure the traverse mechanism 1 with the stationary pin lb of the traverse mechanism 1 being grasped by the V shaped groove portion and the stationary lever 16. Reference numeral 18 is a spring, which is floated with the traverse mechanism 1 being suspended. Since the traverse mechanism is downwardly depressed in the condition of Fig. 10, it is possible to move the disk horizontally so as to arrange it on the centering ring la of the traverse mechanism 1. Then, the stationary lever 16 is upwardly pivoted as shown in Fig. 11 so as to release the insertion of the stationary pin 1b of the traverse mechanism 1, so that the traverse mechanism 1 is upward moved by the spring 18 into a floating condition, and is stable in a position balanced by the spring 18. After the traverse mechanism 1 has been raised, the disk is put into the engagement condition by the centering ring la and the clamper 9. By such construction as described hereinabove, the movement of the disk allows the floating operation only in the horizontal direction, and further, the space which is provided with the degree of freedom necessary for the floating operation may be effectively used.

Fig. 12 through Fig. 14 show an embodiment of the saved space about the disk engagement from the magazine. Fig. 12 shows the draw-out operation and the horizontal movement of the disk from the magazine. Fig. 13 shows the descent of the disk and the horizontal movement after the descent. Fig. 14 shows the positions of the CD and the CD single in the disk engagement position, and the magazine. Reference numeral 19 is an upper guide pin, which is provided to stop in the setting position the horizontal movement of the CD single drawn out from the magazine 5. Reference numeral 20 is a lower guide pin, which is provided to stop the CD single in the engagement position, so that it is adapted to be escaped so as not to come into contact against the CD single in the musical performance condition. In Fig. 12, the disk 6 which has been drawn from the magazine 5 in a method similar to that of Fig. 2 effects the horizontal movement in the arrow mark direction by the rotation of the rollers of the roller arm 4 to come into contact against the upper guide pin 19 so as to come to a stop. The rotation of the roller is stopped through the detection by a switch, the photo-sensor or the like, or by time setting. In Fig. 13, the disk 6 grasped by the rollers 4a, 4b of the roller arm 4 moves from the position of the broken line to the position of the solid line by the descending operation of the roller arm 4, and further effects the horizontal movement in the arrow mark direction by the reverse rotation of the driving roller 4b to come into contact against the lower guide pin 20 so as to come to a stop. The rotation of the driving roller 4b is also detected by the switch, the photo-sensor or the like as in the draw-out operation from the magazine 5. The solid line 6 in Fig. 14 shows the position of the disk 6 (CD single) in the musical performance condition. Also, in a case where the CD 13 is engaged from the insertion opening, the position is provided as shown in the drawing. As compared with Fig. 2, where the' plane condition of the position shown in the broken line, with the disk 6 being lowered from the height of the magazine 5, is provided as the engagement position, the space necessary for the engagement, the musical performance of the CD 13 may be reduced. In the case of Fig. 14, the outer periphery of the CD 13 is kept adjusted into the position of the broken line of the disk 6 so that the lower space of the magazine 5 may be taken up more.

In order to effect a initial resetting operation in such construction as described above, when the power supply has been put to work again after the interruption of the musical performance due to a power cut off or the like, the disk 6 shown in the solid line in Fig. 13 is further moved horizontally in the arrow mark direction by the roller arm 4, and is discharged from the direct insertion opening 10 shown in Fig. 4. When the controlling operation is effected in this manner, the discriminating operation between the disk taken out from the magazine 5 and the disk inserted from the direct insertion opening 10, and the discharging operation thereof are not necessary to be effected when the power supply has been put into work again, thus simplifying the controlling operation.

As described hereinabove, the present invention has an advantage in that the construction of the disk musical performance position is constructed diagonal with respect to the magazine accommodating position for the CD single use to allow the effective use of the space and the use of the function of the auto-changer in the storing operation of the magazine of the CD single on the restricted space of the DIN size for the car loading use.

The inserting opening for loading the CD in the upper portion or the lower portion of the magazine storing position is provided to make it possible to have the change function by the magazine, to have the direct loading of the CD, and to have both the continuous reproduction by the magazine and the reproduction by the direct insertion without the use of the magazine, thus allowing the proper use by the purposes.

Since one set of rollers may be used both at the change operation and the direct insertion time by the vertical motion and the pivoting operation, with an advantage that the number of the components may be reduced and the space may be saved as compared with a case where an exclusive roller is disposed respectively.

By the disk guide member provided forwardly in the roller feed direction, each of the CD and the CD single is adapted to stop its movement in the given position by the disk guide member provided forwardly in the roller feeding direction so as to effect the electrical or mechanical detection through the difference between the stop positions, with an advantage that it becomes easier to discriminate the type of the disks, and to discriminate the movement into the next operation as wrong or right.

By the difference between the stop positions, the rotation amount of the roller or the rotation amount of the disk feed or the position of a guide member for the disk musical performance locating operation use operatively cooperated with the pivoting member of the roller, with an advantage that the respective disks may be moved into the musical performance position by the respective methods.

By the operative cooperation of the disk insertion preventing member with the pivoting member of the roller, the double insertion of the disk may be prevented during the halfway operation such as during the disk musical performance, during the drawing-out operation of the disk from the magazine or the like.

Since the disk which is being drawn out is discharged from the direct insertion opening during the initial resetting operation despite the disk drawn out of the magazine or the disk inserted from the direct insertion opening, the accommodation position of the original disk is not necessary to be electrically or mechanically stored, with an advantage that the number of the components may be reduced and the initial resetting control may be simplified.

The musical performance position of the CD single, with respect to the magazine accommodating position for CD single use, becomes a position, where the disk is horizontally drawn out from the magazine, thereafter moves vertically, further effects the horizontal movement in the magazine direction, thus making the necessary space smaller.

By the downward fixing of the traverse at the loading time, the engagement operation of the disk may be horizontally moved, also by the releasing of the fixing, the traverse is raised to effect the clamping operation of the disk, and at the same time to be put into the floating condition having the degree of lateral, longitudinal freedom, thus making it possible to effect the stable musical performance free from the sound skipping with respect to the car oscillations, with an advantage that the operation is simplified and the space is saved.

## Claims

1. A disk reproducing apparatus comprising
a magazine (5) for storing a plurality of disks (6) therein,
a disk musical performance means (1), and
a disk transfer means (4, 4a, 4b, 5a, 5b, 5c) which is disposed between the mounting position of the magazine and the disk musical performance means (1) and is operated so as to effect the transfer of the disk (6) between the magazine (5) engaged in the mounting position and the disk musical performance means (1),
**characterized in that**
the disk musical perfomance means (1) is disposed in a position deviated obliquely rearwards with respect to the mounting position of the magazine (5).

2. The disk reproducing apparatus of claim 1, charaterized in that the disk transfer means (4, 4a, 4b, 5a, 5b, 5c) includes
a retaining member (4) capable to effect a vertical movement so as to correspond to the position of each disk (6) accommodated in the magazine (5), and
one set of disk feed rollers (4a, 4b) supported by the retaining member (4) for the vertical movement.

3. The disk reproducing apparatus of anyone of the preceding claims, characterized by a disk insertion opening (10) disposed in the upper or lower portion of the mounting position for the engagement of a second disk (13) which is different in diameter from the first disk (14), wherein the disk transfer means (4, 4a, 4b, 5a, 5b, 5c) is disposed between the mounting position of the magazine (5), the disk insertion opening (10) and the disk musical performance means (1) and is operated so as to effect the transfer of the disk (13, 14) between the magazine (5) engaged in the mounting position, the disk insertion opening (10) and the disk musical performance means (1).

4. The disk reproducing apparatus of claim 3, characterized in that the set of disk feed rollers (4a, 4b) are capable to effect the vertical movement so as to correspond to the position of both the first (14) and second disks (13) and are retained by the retaining member (4), wherein the retaining member (4) may pivot around a fixed point (4c) on a stationary base plate (2) of the apparatus and is adapted to wait in a condition orthogonal to the insertion direction of the second disk (13) into the disk insertion opening (10) in order to transfer the second disk (13) engaged by the disk inserting opening (10) and in a condition rotated by the angle given with respect to said insertion direction in order to transfer the first disk (14) accommodated in the magazine (5).

5. The disk reproducing apparatus of one of claims 3 or 4, characterized in that the insertion opening (10) is adapted to engage with the first (14) and second disks (13) different in diameter, the disk musical performance means (1) is disposed in a position deviated obliquely rearwards with respect to the disk insertion opening (10), the disk transfer means (4, 4a, 4b, 5a, 5b, 5c) is operated so as to effect the transfer of the disks (13, 14) between the disk insertion opening (10) and the disk musical performance means (1), wherein a prevention member (15) is provided in a position forward of the disk transfer means (4, 4a, 4b, 5a, 5b, 5c) in the disk insertion direction, which moves to prevent that in the given position a first (14) or second disk (13) is inserted into the disk insertion opening (10), and sensor means (B1, B2, B3) is disposed to detect the difference between the stop condition of first (14) and the second disks (13) resulting from one pair of detection guide members (12a, 12b) so as to discriminate between first (14)and second disks (13) inserted.

6. The disk reproducing apparatus of claim 5, characterized in that the disk feed amount by the disk transfer means (4, 4a, 4b, 5a, 5b, 5c) is adapted to be selected from the sensor means output in accordance with first (14) or second disks (13).

7. The disk reproducing apparatus of claim 3, characterized by an initial resetting operation effecting a disk (13, 14) being in the musical performance position or being in the course of transport when the power supply has been put to work again following a power cut off is to be discharged from the disk insertion opening (10) despite the original disk position.

8. The disk reproducing apparatus of anyone of the preceding claims, characterized in that the disk musical performance means (1) is disposed in a height position not in contact with the mounting position of the magazine (5) and the disk (6) in the musical performance position is different in position from the magazine (5), the apparatus comprising a first guide means (19) effecting positional regulation of the disk (6) when drawn out horizontally from the magazine (5), a second guide means (20) disposed under the magazine (5) so as to effect positional regulation of the disk (6) when moved towards the magazine (5) in reverse horizontal direction, so that the disk transfer means (4a, 4b) effects the vertical movement after the disk (6) has been horizontally drawn out from the magazine (5) and moves the disk (6) into the musical performance position after said movement towards the magazine (5).

9. The disk reproducing apparatus of anyone of the preceding claims, characterized in that the disk musical performance means (1) includes a traverse main body (1, 2) upwardly urged with a spring (18) or dumper rubber (3) into a floating condition during the time of musical performance so that the traverse main body (1, 2) may be secured downwardly during the horizontal movement of the disk (6) by the disk transfer means (4a, 4b).

## Patentansprüche

1. Wiedergabegerät für scheibenförmigen Datenträger, aufweisend ein Magazin (5) zur Aufnahme mehrerer scheibenförmiger Datenträger (6),
eine Einrichtung (1) zum Abspielen von Musik von scheibenförmigen Datenträgern (Musikabspieleinrichtung) und
eine Scheibenüberführungseinrichtung (4, 4a, 4b, 5a, 5b, 5c), die zwischen dem Montageort des Magazins und der Musikabspieleinrichtung (1) angeordnet ist und deren Betrieb die Überführung von scheibenförmigen Datenträgern (6) zwischen dem am Montageort liegenden Magazin (5) und der Musikabspieleinrichtung (1) bewirkt,
**dadurch gekennzeichnet,**
daß die Musikabspieleinrichtung (1) bezüglich des Montageorts des Magazins (5) in einer nach hinten kreuzartig versetzten Lage angeordnet ist.

2. Wiedergabegerät nach Anspruch 1, dadurch gekennzeichnet, daß die Scheibenübertragungseinrichtung (4, 4a, 4b, 5a, 5b, 5c)
eine Halteeinrichtung (4), die vertikal bewegbar ist, damit sie der Position einer jeder einzelnen, im Magazin (5) untergebrachten Scheibe (6) entspricht, und
einen Satz Scheibentransportrollen (4a, 4b), die zur Vertikalbewegung an der Halteeinrichtung (4) angebracht sind,
aufweist.

3. Wiedergabeeinrichtung nach einem der vorhergehenden Ansprüche, gekennzeichnet durch eine Scheibeneinführungsöffnung (10), die im oberen oder unteren Bereich des Montageorts zum Aufnehmen einer zweiten Scheibe (13) angeordnet ist, die einen anderen Durchmesser hat als die erste Scheibe (14), wobei die Scheibenüberführungseinrichtung (4, 4a, 4b, 5a, 5b, 5c) zwischen dem Montageort des Magazins (5), der Scheibeneinführungsöffnung (10) und der Musikabspieleinrichtung (1) angeordnet ist und beim Betrieb die Überführung der Scheibe (13, 14) zwischen dem am Montageort liegenden Magazin (5), der Scheibeneinführungsöffnung (10) und der Musikabspieleinrichtung (1) bewirkt.

4. Wiedergabegerät nach Anspruch 3, dadurch gekennzeichnet, daß der Satz Scheibentransportrollen (4a, 4b) vertikal bewegbar ist, um der Position sowohl der erste (14), als auch der zweiten Scheibe (13) zu entsprechen und von der Halteeinrichtung (4) gehalten wird, wobei die Halteeinrichtung (4) um einen Festpunkt (4c) auf einer festen Grundplatte (2) des Geräts pendeln kann und dazu eingerichtet ist, in senkrechter Position zur Einführungsrichtung der zweiten Scheibe (13) in die Scheibeneinführungsöffnung (10), um die von der Scheibeneinführungsöffnung (10) erfaßte zweite Scheibe (13) zu überführen und in einer Position, in der sie um einen gegebenen Winkel bezüglich der Einführungsrichtung gedreht ist, zu warten, um die im Magazin (5) untergebrachte erste Scheibe (14) zu übertragen.

5. Wiedergabegerät nach Anspruch 3 oder 4, dadurch gekennzeichnet, daß die Einführungsöffnung (10) dazu eingerichtet ist, die erste (14) und zweite Scheibe (13) von unterschiedlichem Durchmesser aufzunehmen, daß die Musikabspieleinrichtung (1) in einer nach hinten kreuzartig gesetzten Lage bezüglich der Scheibeneinführungsöffnung (10) angeordnet ist, daß die Scheibenüberführungseinrichtung (4, 4a, 4b, 5a, 5b, 5c) beim Betrieb die Überführung der Scheiben (13, 14) zwischen der Scheibeneinführungsöffnung (10) und der Musikabspieleinrichtung (1) bewirkt, wobei an der Vorderseite der Scheibenüberführungseinrichtung (4, 4a, 4b, 5a, 5b, 5c) in der Einführungsrichtung der Scheiben ein Sperrglied (15) vorgesehen ist, durch deren Bewegung verhindert wird, daß bei der gegebenen Lage eine erste (14) oder zweite Scheibe (13) in die Scheibeneinführungsöffnung (10) eingeführt wird, und daß eine Sensoreinrichtung (B1, B2, B3) angebracht ist, um den Unterschied zwischen der Stoplage der ersten (14) und der zweiten Scheibe (13) zu erfassen, der durch ein Paar Erfassungsglieder (12a, 12b) entsteht, damit unterschieden wird, ob eine erste (14) oder eine zweite Scheibe (13) eingeführt ist.

6. Wiedergabegerät nach Anspruch 5, dadurch gekennzeichnet, daß die Scheibenbeschickungsmenge durch die Scheibenüberführungseinrichtung (4, 4a, 4b, 5a, 5b, 5c) so eingerichtet ist, daß sie durch den Ausgang der Sensoreinrichtung nach Maßgabe einer ersten (14) oder einer zweiten Scheibe (13) ausgewählt werden kann.

7. Wiedergabegerät nach Anspruch 3, gekennzeichnet durch eine Reset-Funktion, durch die eine Scheibe (13, 14), die sich in der Position der Musikabspielung oder auf dem Weg des Transports befindet, beim Wiedereinschalten der Spannungsversorgung nach einem Netzausfall trotz der ursprünglichen Position der Scheibe aus der Scheibeneinführungsöffnung (10) ausgestoßen wird.

8. Wiedergabegerät nach einem der vorhergehenden Ansprüche, dadurch gekennzeichnet, daß die Musikabspieleinrichtung (1) in einer Höhenposition angeordnet ist, die nicht in Kontakt mit dem Montageort des Magazins (5) ist, und daß die Scheibe (6) in der Position der Musikabspielung eine vom Magazin (5) unterschiedliche Position einnimmt, wobei das Gerät ein erstes Führungselement (19) aufweist, welches die Positionsregulierung der Scheibe (6) bewirkt, wenn sie horizontal aus dem Magazin (5) gezogen wird, eine zweite Führungseinrichtung (20), die unterhalb des Magazins (5) angeordnet ist, um die Positionsregulierung der Scheibe zu bewirken, wenn diese in umgekehrter horizontaler Richtung auf das Magazin (5) zu bewegt wird, so daß die Scheibenübertragungseinrichtung (4a, 4b) die Vertikalbewegung bewirkt, nachdem die Scheibe (6) horizontal aus dem Magazin (5) herausbewegt wurde und die Scheibe (6) nach dieser Bewegung in die Position der Musikabspielung auf das Magazin (5) zu bewegt.

9. Wiedergabegerät nach einem der vorhergehenden Ansprüche, dadurch gekennzeichnet, daß die Musikabspieleinrichtung (1) einen querliegenden Hauptkörper (1, 2) einschließt, der durch eine Feder (18) oder einen Dämpfungsgummi (3) während der Zeit der Musikabspielung nach oben in eine Schwebelage gedrückt wird, so daß der querliegende Hauptkörper (1, 2) während der Horizontalbewegung der Scheibe (6) durch die Scheibenüberführungseinrichtung (4a, 4b) nach unten gehalten werden kann.

## Revendications

1. Appareil de reproduction de disque comprenant un magasin (5) pour stocker une multitude de disques (6) dans celui-ci
un moyen de reproduction musicale de disque (1), et
un moyen de transfert de disque (4, 4a, 4b, 5a, 5b, 5c) qui est disposé entre la position de montage du magasin et le moyen de reproduction musicale du disque (1) et est mis en oeuvre de façon à effectuer le transfert du disque (6) entre le magasin (5) engagé dans la position de montage et le moyen de reproduction musicale du disque (1),
caractérisé en ce que
le moyen de reproduction musicale du disque (1) est disposé dans une position déviée obliquement vers l'arrière par rapport à la position de montage du magasin (5)

2. Appareil de reproduction de disque selon la revendication 1, caractérisé en ce que le moyen de transfert de disque (4, 4a, 4b, 5a, 5b, 5c) comporte un élément de retenue (4) capable d'effectuer un mouvement vertical de façon à correspondre à la position de chaque disque (6) reçu dans le magasin (5), et un ensemble de rouleaux d'avancée de disque (4a, 4b) supporté par l'élément de retenue (4) pour le mouvement vertical.

3. Appareil de reproduction de disque selon l'une quelconque des revendications précédentes, caractérisé par un ouverture d'insertion de disque (10) disposée à la partie supérieure ou à la partie inférieure de la position de montage pour l'engagement d'un second disque (13) qui est d'un diamètre différent du premier disque (14), dans lequel le moyen de transfert de disque (4, 4a, 4b, 5a, 5b, 5c) est disposée entre la position de montage du magasin (5), l'ouverture d'insertion de disque (10) et le moyen de reproduction musicale du disque (1) et est mis en ouvre de façon à effectuer le transfert du disque (13, 14) entre le magasin (5) engagé dans la position de montage, l'ouverture d'insertion de disque (′10) et le moyen de reproduction musicale du disque (1).

4. Appareil de reproduction de disque selon la revendication 3, caractérisé en ce que l'ensemble des rouleaux d'avancée de disque (4a, 4b) est capable d'effectuer le mouvement vertical de façon à correspondre à la position des premier (14)et second (13) disques et sont retenus par l'élément de retenue (4), dans lequel l'élément de retenue peut pivoter autour d'un point fixe (4c) sur une plaque de base fixe (2) de l'appareil et est adapté pour attendre dans une condition perpendiculaire à la direction d'insertion du second disque (13) dans l'ouverture d'insertion de disque (10) afin de transférer le second disque (13) engagé par l'ouverture d'insertion de disque (10) et dans une condition tourné par l'angle donné par rapport à ladite direction d'insertion afin de transférer le premier disque (14) reçu dans le magasin (5).

5. Appareil de reproduction de disque selon l'une des revendications 3 ou 4, caractérisé en ce que l'ouverture d'insertion (10) est adaptée pour engager le premier (14) et le second (13) disque d'un diamètre différent, le moyen de reproduction musicale du disque (1) est disposé dans une position déviée obliquement vers l'arrière par rapport à l'ouverture d'insertion de disque (10), le moyen de transfert du disque (4, 4a, 4b, 5a, 5b, 5c) est mis en oeuvre de façon à effectuer le transfert des disques (13, 14) entre l'ouverture d'insertion de disque (10) et le moyen de reproduction musicale du disque (1) dans lequel un élément d'empêchement (15) est prévu dans une position vers l'avant du moyen de transfert de disque (4, 4a, 4b, 5a, 5b, 5c) dans la direction d'insertion de disque, lequel se déplace afin d'empêcher que dans la position donnée, un premier (14) ou un second disque (13) soit inséré dans l'ouverture d'insertion de disque (10) et un moyen de capteur (B1, B2, B3) est prévu pour détecter la différence entre la condition d'arrêt du premier disque (14) et du second disque (13) résultant d'une paire d'élément de guidage de détection (12a, 12b) de façon à effectuer la discrimination entre le premier disque (14) et le second disque (13) insérés.

6. Appareil de reproduction de disque selon la revendication 5, caractérisé en ce que la quantité d'avancée de disque par le moyen de transfert de disque (4, 4a, 4b, 5a, 5b, 5c) est adapté pour être sélectionné à partir de la sortie du moyen de capteur en conformité avec le premier disque (14) ou le second disque (13).

7. Appareil de reproduction de disque selon la revendication 3, caractérisé par une opération de remise à l'état initial affectant un disque (13, 14) étant dans la position de reproduction musicale ou étant en cours de transport lorsque l'alimentation a de nouveau été appliquée suivant la coopore d'alimentation qui doit être déchargé à partir de l'ouverture d'insertion de disque (10) sans tenir compte de la position à l'origine du disque.

8. Appareil de reproduction de disque selon l'une quelconque des revendications précédentes, caractérisé en ce que le moyen de reproduction musicale du disque (1) est disposé à une position en hauteur qui n'est pas en contact avec la position de montage du magasin (5) et le disque (6) dans la position de reproduction musicale est à une position différente par rapport au magasin (5), l'appareil comprenant un premier moyen de guidage (19) effectuant la régulation en position du disque (6) lorsque sorti horizontalement du magasin (5), un second moyen de guidage (20) disposé sous le magasin (5) de façon à effectuer la régulation en position du disque (6) lorsque déplacé vers le magasin (5) dans la direction horizontale inverse, de sorte que le moyen de transfert du disque (4a, 4b) effectue le mouvement vertical après que le disque (6) ait été horizontalement sorti du magasin (5) et déplace le disque (6) à la position de reproduction musicale après ledit déplacement vers le magasin (5).

9. Appareil de reproduction de disque selon l'une quelconque des revendications précédentes, caractérisé en ce que le moyen de reproduction musicale du disque (1) comporte un corps principal transversal (1, 2) sollicité vers le haut avec un ressort (18) ou un caoutchouc amortisseur (3) à une condition flottante pendant la durée de la reproduction musicale de sorte que le corps principal transversal (1, 2) peut être fixé vers le bas pendant le déplacement horizontal du disque (6) par le moyen de transfert du disque (4a, 4b).
